# EUROPEAN PATENT APPLICATION

(11) **EP 4 424 788 A1**
(43) Date of publication of application: **04.09.2024**
(21) Application number: 22887113.3
(22) Date of filing: 27.10.2022
(51) Int. Cl.: C09J 11/06, C09J 175/08, C09D 11/10

(54) **AQUEOUS RESIN COMPOSITION, IMAGE FORMING METHOD, AND PRINTED MATTER**

(30) Priority: 28.10.2021 JP 2021176671
(71) Applicant: Mitsubishi Chemical Corporation, Chiyoda-ku Tokyo 100-8251 (JP)
(72) Inventor: FUJII, Akiteru, Tokyo 100-8251 (JP); XU, Yuqing, Tokyo 100-8251 (JP); SAWADA, Sachiko, Tokyo 100-8251 (JP); HIRAMOTO, Yuuya, Tokyo 100-8251 (JP)
(74) Representative: Hoffmann Eitle
(86) International application number: PCT/JP2022/040125
(87) International publication number: WO 2023/074788

(57) **Abstract**

An aqueous resin composition including at least: a polyurethane resin that contains a carboxylate group; a crosslinking agent that contains at least two or more carbodiimide groups in one molecule; and a surfactant, wherein a molar ratio of the carbodiimide groups contained in the crosslinking agent to the carboxylate group contained in the polyurethane resin is 0.1 or greater and 5.0 or less, and the aqueous resin composition further contains an amine compound having a pKb of 3.5 or greater and 4.7 or less.

## Description

### Technical Field

The present invention relates to an aqueous resin composition applied to printing media. Further, the present invention relates to an image forming method and a printed material, using this aqueous resin composition.

### Background Art

Particularly in digital printing for commercial printing in the field of digital printing represented by an electrophotographic method or an ink jet method, printing is required to be properly performed on various printing media such as a plastic film and coated paper. In this case, in order to ensure the adhesiveness of a toner or an ink to a wide variety of printing media, an adhesive layer (also referred to as an undercoat layer or a primer layer) is formed on printing media in many cases. Here, from the viewpoint of environmental compatibility, an aqueous resin composition is suitably used as a coating liquid for an adhesive layer.

In the aqueous resin composition for an adhesive layer, a water-soluble resin such as polyethyleneimine (PTL 1), a dispersion liquid of an acrylic resin or a polyurethane resin (PTL 2), and a combination of a dispersion liquid of a specific polyurethane resin and a carbodiimide crosslinking agent (PTL 3) have been suggested.

### Citation List

### Patent Literature

PTL 1: Japanese Unexamined Patent Application Publication (Translation of PCT Application) No. 2018-533032
PTL 2: United States Patent No. 7470736
PTL 3: International Publication No. WO2019/131414

### Summary of Invention

### Technical Problem

When an aqueous resin composition of the related art is used, durability of a printed material after coating, such as water resistance, heat resistance, or solvent resistance, is insufficient. Therefore, in such an aqueous resin composition, examination has been conducted to improve the water resistance and the solvent resistance of a coated layer by causing a crosslinking action on the coated layer after coating (PTL 3).

An aqueous resin composition used in an adhesive layer for digital printing is required to have liquid stability in a case of repeated use of a liquid after being used once, in addition to the liquid stability during transportation and storage. However, with the liquid configuration of the related art, both the performance and the liquid stability are difficult to achieve at the same time. The liquid stability during transportation and storage can be improved by separating a resin component and a crosslinking agent component from each other to form a two-liquid type, but the liquid after use cannot be repeatedly used when the liquid stability after two liquids are mixed is insufficient. Therefore, the liquid after use is disposed of, which is not economical.

Meanwhile, in a one-liquid type in which a resin component and a crosslinking agent component are mixed in advance, liquid stability is difficult to maintain under a condition of a change in temperature during transportation and storage, particularly under a high temperature condition of 40°C or higher.

An object of a first embodiment of the present invention is to provide an aqueous resin composition that exhibits satisfactory durability and a satisfactory image quality in a printed material after coating, suppresses an odor during printing, has satisfactory liquid stability, that is, can maintain fluidity of a liquid even after an elapse of a certain time under a high temperature condition of 40°C or higher, and can obtain satisfactory adhesiveness even when being applied to a printed material after an elapse of a certain time under a high temperature condition of 40°C or higher.

An object of a second embodiment of the present invention is to provide an aqueous resin composition that exhibits satisfactory durability and a satisfactory image quality in a printed material after coating and has satisfactory liquid stability, that is, can maintain fluidity of a liquid even after an elapse of a certain time under a high temperature condition of 40°C or higher.

An object of a third embodiment of the present invention is to provide an aqueous resin composition that exhibits satisfactory durability and a satisfactory image quality in a printed material after coating and has satisfactory liquid stability, that is, can maintain fluidity of a liquid even after an elapse of a certain time under a high temperature condition of 40°C or higher. Solution to Problem

As a result of intensive examination, the present inventors completed the first to third embodiments of the present invention described below.

### Advantageous Effects of Invention

A first embodiment of the present invention proposes an aqueous resin composition comprising at least:
a polyurethane resin that contains a carboxylate group;
a crosslinking agent that contains at least two or more carbodiimide groups in one molecule; and
a surfactant,
wherein a molar ratio of the carbodiimide groups contained in the crosslinking agent to the carboxylate group contained in the polyurethane resin is 0.1 or greater and 5.0 or less, and
the aqueous resin composition further contains an amine compound having a pKb of 3.5 or greater and 4.7 or less.

A second embodiment of the present invention proposes an aqueous resin composition comprising at least:
a polyurethane resin that contains a carboxylate group;
a crosslinking agent that contains at least two or more carbodiimide groups in one molecule; and
a surfactant,
wherein the polyurethane resin is a polyether polyurethane resin, and
a molar ratio of the carbodiimide groups contained in the crosslinking agent to the carboxylate group contained in the polyurethane resin is 0.1 or greater and 2.9 or less.

A third embodiment of the present invention proposes an aqueous resin composition comprising at least:
a polyurethane resin that contains a carboxylate group;
a crosslinking agent that contains at least two or more carbodiimide groups in one molecule; and
a surfactant,
wherein a carbodiimide group equivalent of the crosslinking agent is 400 mol⁻¹ or greater and 700 mol⁻¹ or less, and
a molar ratio of the carbodiimide groups contained in the crosslinking agent to the carboxylate group contained in the polyurethane resin is 0.4 or greater.

The gist of the present invention resides in the following <1> to <9>.
<1> An aqueous resin composition comprising at least:
   a polyurethane resin that contains a carboxylate group;
   a crosslinking agent that contains at least two or more carbodiimide groups in one molecule; and
   a surfactant,
   wherein a molar ratio of the carbodiimide groups contained in the crosslinking agent to the carboxylate group contained in the polyurethane resin is 0.1 or greater and 5.0 or less, and
   the aqueous resin composition further contains an amine compound having a pKb of 3.5 or greater and 4.7 or less.
<2> An aqueous resin composition comprising at least:
   a polyurethane resin that contains a carboxylate group;
   a crosslinking agent that contains at least two or more carbodiimide groups in one molecule; and
   a surfactant,
   wherein the polyurethane resin is a polyether polyurethane resin, and
   a molar ratio of the carbodiimide groups contained in the crosslinking agent to the carboxylate group contained in the polyurethane resin is 0.1 or greater and 2.9 or less.
<3> An aqueous resin composition comprising at least:
   a polyurethane resin that contains a carboxylate group;
   a crosslinking agent that contains at least two or more carbodiimide groups in one molecule; and
   a surfactant,
   wherein a carbodiimide group equivalent of the crosslinking agent is 400 mol⁻¹ or greater and 700 mol⁻¹ or less, and
   a molar ratio of the carbodiimide groups contained in the crosslinking agent to the carboxylate group contained in the polyurethane resin is 0.4 or greater.
<4> The aqueous resin composition according to any one of <1> to <3>,
   wherein the polyurethane resin is a saturated hydrocarbon-based polyether polyurethane resin and contains an ammonium carboxylate group.
<5> The aqueous resin composition according to any one of <1> to <4>,
   wherein the carbodiimide group equivalent of the crosslinking agent is 500 mol⁻¹ or greater and 700 mol⁻¹ or less.
<6> The aqueous resin composition according to <1>, <4>, or <5>,
   wherein the amine compound has a boiling point of 151°C or higher.
<7> A digital printing type image forming method comprising:
   coating a printing medium with the aqueous resin composition according to any one of <1> to <6> to form an adhesive layer and forming an ink layer with an ink that contains a resin containing a carboxy group.
<8> A digital printing type image forming method comprising:
   coating a printing medium with an aqueous resin composition to form an adhesive layer and forming an ink layer with an ink,
   wherein the aqueous resin composition contains a polyurethane resin containing a carboxylate group, and a crosslinking agent containing at least two or more carbodiimide groups in one molecule.
<9> A printed material comprising:
   an adhesive layer and an ink layer on a printing medium,
   wherein the adhesive layer has a crosslinked structure of a polyurethane resin containing a carboxylate group and a crosslinking agent containing a carbodiimide group. Advantageous Effects of Invention

The aqueous resin composition suggested by the first embodiment of the present invention exhibits satisfactory durability and a satisfactory image quality in a printed material after coating, suppresses an odor during printing, has satisfactory liquid stability, that is, can maintain fluidity of a liquid even after an elapse of a certain time under a high temperature condition of 40°C or higher, and can obtain satisfactory adhesiveness even when being applied to a printed material after an elapse of a certain time under a high temperature condition of 40°C or higher.

The aqueous resin composition suggested by the second embodiment of the present invention exhibits satisfactory durability and a satisfactory image quality in a printed material after coating and has satisfactory liquid stability, that is, can maintain fluidity of a liquid even after an elapse of a certain time under a high temperature condition of 40°C or higher.

The aqueous resin composition suggested by the third embodiment of the present invention exhibits satisfactory durability and a satisfactory image quality in a printed material after coating and has satisfactory liquid stability, that is, can maintain fluidity of a liquid even after an elapse of a certain time under a high temperature condition of 40°C or higher.

### Brief Description of Drawings

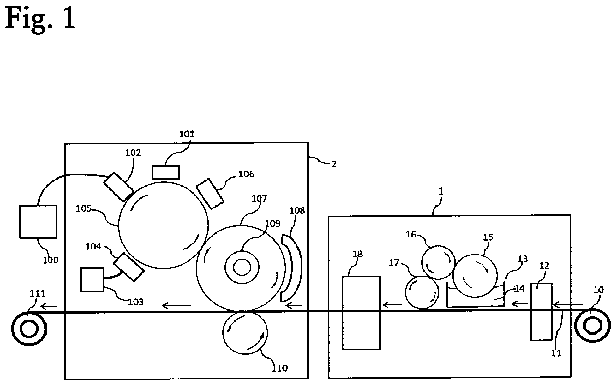

[Fig. 1] Fig. 1 is a schematic cross-sectional view showing an aspect of an electrophotographic digital printing press to which the present invention is applied. Description of Embodiments

Hereinafter, embodiments of the present invention will be described in detail. The configuration requirements described below are representative examples of the embodiments of the present invention, and can be implemented by being appropriately modified within a range not departing from the gist of the present invention.

In the description below, measurement of physical properties and operation steps are basically performed under conditions of a normal temperature and a normal pressure unless otherwise specified.

Hereinafter, an aqueous resin composition according to a first embodiment, an aqueous resin composition according to a second embodiment, and an aqueous resin composition according to a third embodiment of the present invention will be collectively referred to as "aqueous resin composition of the present invention".

### [Aqueous resin composition]

The aqueous resin composition of the present invention can be suitably used as an aqueous coating liquid and particularly as an aqueous coating liquid for an adhesive layer (hereinafter, also referred to as an undercoat layer or a primer layer) used to ensure the adhesiveness between a printing medium and a toner or an ink. In other words, the aqueous resin composition of the present invention can be suitably used as a primer for forming a primer layer.

The aqueous resin composition according to the first embodiment of the present invention contains a polyurethane resin containing a carboxylate group, a crosslinking agent containing at least two or more carbodiimide groups in one molecule, a surfactant, and an amine compound having a pKb of 3.5 or greater and 4.7 or less.

The aqueous resin composition according to the second and third embodiments of the present invention contains a polyurethane resin containing a carboxylate group, a crosslinking agent containing at least two or more carbodiimide groups in one molecule, and a surfactant.

The aqueous resin composition used in an adhesive layer for digital printing is required to have adhesiveness between an adhesive layer and a printing medium, adhesiveness between an adhesive layer and an ink layer, and durability such as water resistance or solvent resistance of an adhesive layer.

In the aqueous resin composition of the present invention, the adhesiveness between the adhesive layer and the printing medium and the durability such as water resistance or solvent resistance of the adhesive layer can be improved by carrying out a crosslinking reaction between the polyurethane resin and the crosslinking agent. Specifically, a state where the adhesive layer is in close contact with the printing medium is fixed by the crosslinking so that an effect of suppressing infiltration of water or a solvent is obtained.

Simultaneously, the adhesiveness between the adhesive layer and the ink layer can be improved by carrying out the reaction between the crosslinking agent contained in the adhesive layer and the resin contained in the ink layer and/or improving the chemical affinity between the crosslinking agent and the resin.

Meanwhile, the aqueous resin composition used in an adhesive layer for digital printing is required to have liquid stability during transportation and storage and liquid stability in a case of repeated use of a liquid after being used once.

In the former case, it is necessary to suppress a change in liquid properties such as an increase in liquid viscosity or gelation due to the reaction between the polyurethane resin and the crosslinking agent or an increase in particle diameter of resin particles. When such a change in liquid properties occurs, application of the liquid cannot be uniformly made, the thickness of the coated film is not constant, the liquid properties for application are not appropriate any longer, and as a result, application of the liquid may not be made.

In the latter case, the repeated use includes not only a case where a liquid is used for application once and the remaining liquid is reused but also a case where the remaining liquid and a new liquid are mixed and used. In these cases, it is necessary to prevent degradation of the liquid properties, the coating quality, and the performance as the adhesive layer after coating, as compared with a case where an entirely new liquid is used. When the remaining liquid cannot be used due to the degradation of such performance, the remaining liquid is required to be disposed of, which is disadvantageous in terms of the cost.

The aqueous resin composition of the present invention has satisfactory liquid stability during the transportation and the storage and at the time of repeated use. The reason for this is assumed as follows.

The polyurethane resin containing a carboxylate group used in the present invention is dispersed in the form of particles in the coating liquid and stabilized by a counter ion and an amine compound. Meanwhile, a crosslinking agent containing a carbodiimide group typically reacts with a carboxylate group at room temperature, but it is considered that when the blending ratio between the crosslinking agent and the polyurethane resin is set to be in an appropriate range, a micellar structure surrounded by hydrophilic groups is formed, or the crosslinking agent is spatially and electrically repulsively isolated from the polyurethane resin due to the amine compound, the crosslinking reaction in the liquid is minimized, crosslinking between the polyurethane resin particles at least in the liquid is suppressed, and thus the liquid stability is enhanced.

The concentration of non-volatile components in the aqueous resin composition is preferably 10% by mass or greater, more preferably 20% by mass or greater, and still more preferably 25% by mass or greater and also preferably 50% by mass or less, more preferably 40% by mass or less, and still more preferably 35% by mass or less.

Here, the concentration of the non-volatile components denotes the proportion (% by mass) of the total amount of a component in a solid state at 25°C, a component in a liquid state at 25°C, and a component having a boiling point of 150°C or higher in the total amount of the aqueous resin composition.

The viscosity of the aqueous resin composition of the present invention is preferably 1 mPa·s or greater, more preferably 5 mPa·s or greater, and still more preferably 10 mPa·s or greater and also preferably 200 mPa·s or less, more preferably 100 mPa·s or less, and still more preferably 50 mPa·s or less.

Here, the viscosity of the aqueous resin composition is the viscosity at 25°C. The viscosity of the aqueous resin composition can be measured, for example, by using a B-type viscometer.

### <Polyurethane resin>

Examples of the polyurethane resin contained in the aqueous resin composition of the present invention (hereinafter, also referred to as "polyurethane resin of the present invention") include a water-soluble polyurethane resin and a dispersible polyurethane resin. Among these, a dispersible polyurethane resin is preferable from the viewpoints of the performance as an adhesive layer and the liquid stability. Here, the term "dispersible" denotes water-dispersible, that is, suspensible and also denotes water-insoluble.

That is, it is preferable that the polyurethane resin be stably dispersed as particles in the aqueous resin composition of the present invention. Further, from the viewpoint of sufficiently obtaining the functions as the adhesive layer, it is preferable that the polyurethane resin be of a self-dispersion type.

A polyurethane resin in which polyurethane obtained by reacting a polyol and a polyisocyanate is chain-extended with a low-molecular-weight compound having two or more active hydrogens such as a diol, a diamine, and a dicarboxylic acid is preferable as the polyurethane resin. In this case, a polyurethane resin that uses a polyol component containing a carboxylate group as a part of the polyol component is suitably used. Further, the dispersibility in water can be satisfactorily maintained by neutralizing the carboxylate group with a basic component.

According to the first and third embodiments of the present invention, from the viewpoints of the adhesiveness to various printing media and the smoothness during coating, the polyurethane resin is preferably a polyether polyurethane resin and more preferably a saturated hydrocarbon-based polyether polyurethane resin.

According to the second embodiment of the present invention, the polyurethane resin is a polyether polyurethane resin and preferably a saturated hydrocarbon-based polyether polyurethane resin.

### (Polyol)

Examples of a polyhydric alcohol serving as a precursor of a polyol component include ethylene glycol, diethylene glycol, triethylene glycol, propylene glycol, 1,6-hexanediol, 3-methyl-1,5-pentanediol, 1,9-nonanediol, trimethylolpropane, glycerin, pentaerythritol, cyclohexanedimethanol, bishydroxyethoxybenzene, N-alkyldiethanolamine, and multimers thereof (such as a dimer and an octamer). Among these, from the viewpoint of adhesiveness to a polyolefin-based printing medium, propylene glycol, 1,6-hexanediol, 3-methyl-1,5-pentanediol, cyclohexane dimethanol is preferable, and 1,6-hexanediol or cyclohexane dimethanol is more preferable. These polyhydric alcohols can be used alone or in combination of two or more kinds thereof.

As the polyol, polyester polyol, polyether polyol, or polycarbonate polyol is preferable, and polyether polyol or polycarbonate polyol is more preferable from the viewpoint of durability such as water resistance, and polyether polyol is still more preferable from the viewpoint of adhesiveness to various printing media. These polyols can be used alone or in combination of two or more kinds thereof.

Examples of the polyether polyol include saturated hydrocarbon-based polyether polyol obtained by addition polymerization of saturated hydrocarbon-based alkylene oxide such as ethylene oxide, propylene oxide, or butylene oxide to the polyhydric alcohol, and aromatic polyether polyol obtained by addition polymerization of aromatic alkylene oxide such as styrene oxide. Among these, from the viewpoint of adhesiveness to a polyolefin-based printing medium, saturated hydrocarbon-based polyether polyol is preferable.

Examples of the saturated hydrocarbon-based polyether polyol include polyethylene glycol, polypropylene glycol, and poly(1,6-hexanediol). Among these, from the viewpoints of ease of production and flexibility, polyethylene glycol or polypropylene glycol is preferable, and polypropylene glycol is more preferable.

Examples of the polycarbonate polyol include polytetramethylene carbonate diol, polyhexamethylene carbonate diol, polydecamethylene carbonate diol, poly-3-methyl-1,5-pentane carbonate diol, and poly-1,4-cyclohexanedimethylene carbonate diol. Among these, from the viewpoint of durability, polytetramethylene carbonate diol or polyhexamethylene carbonate diol is preferable.

### (Polyisocyanate)

Examples of the polyisocyanate include saturated hydrocarbon-based diisocyanate such as hexamethylene diisocyanate, isophorone diisocyanate, or 4,4-methylene bis(cyclohexylisocyanate), aromatic diisocyanate such as m-xylene diisocyanate or tolylene diisocyanate, unsaturated hydrocarbon-based diisocyanate such as dimer acid diisocyanate, and reaction products of these compounds and polyhydric alcohols. Among these, from the viewpoint of the adhesiveness to various printing media, saturated hydrocarbon-based diisocyanate is preferable. Further, these can be used alone or in combination of two or more kinds thereof.

The acid value (amount of potassium hydroxide required for neutralization, unit: mgKOH/g) can be used as an index of the amount of the carboxylate group contained in the polyurethane resin. The acid value of the polyurethane resin of the present invention is preferably 2 mgKOH/g or greater, more preferably 5 mgKOH/g or greater, and still more preferably 10 mgKOH/g or greater and also preferably 50 mgKOH/g or less, more preferably 20 mgKOH/g or less, and still more preferably 15 mgKOH/g or less. When the acid value thereof is greater than or equal to the above-described lower limits, crosslinking after coating and drying is likely to proceed. When the acid value thereof is less than or equal to the above-described upper limits, an increase in particle diameter of the polyurethane resin particles and an increase in viscosity of the coating liquid can be suppressed.

The carboxylate group contained in the polyurethane resin of the present invention may have hydrogen ions or quaternary ammonium ions derived from ammonia or an amine compound added during the production of the resin, as counter ions in a state where the polyurethane resin is dispersed in water. Therefore, the acid value of the polyurethane resin of the present invention can be quantitatively measured by volatilizing the ammonia or the amine compound from the aqueous dispersion liquid of the polyurethane resin so that the counter ions of the carboxylate group are completely formed of only hydrogen atoms, volatilizing water to dry and solidify the resin, completely dissolving the dried and solidified resin in a solvent, and titrating the solvent with a potassium hydroxide (KOH) aqueous solution. For example, ethanol, isopropanol, or acetone can be used as the solvent.

As described above, the carboxylate group of the polyurethane resin according to the present invention may have hydrogen ions or quaternary ammonium ions as counter ions in a state where the polyurethane resin is dispersed in water. In other words, the polyurethane resin of the present invention may contain a carboxy group or an ammonium carboxylate group in a state where the polyurethane resin is dispersed in water. Among these, from the viewpoint of self-dispersibility, it is preferable that the polyurethane resin contains an ammonium carboxylate group. The polyurethane resin containing an ammonium carboxylate group can be produced by using, for example, ammonia as a neutralizer during the production.

The aqueous resin composition of the present invention is required to have uniform film forming properties after coating, and particularly from the viewpoint of forming a submicron thin film, the particle diameter of the polyurethane resin particles is preferably 200 nm or less, more preferably 100 nm or less, and still more preferably 50 nm or less.

The content of the polyurethane resin according to the present invention in the aqueous resin composition is preferably 18% by mass or greater and more preferably 20% by mass or greater, and also preferably 35% by mass or less and more preferably 30% by mass or less. When the content of the polyurethane resin is greater than or equal to the above-described lower limits, degradation of the adhesiveness and durability caused by insufficient drying of the aqueous resin composition after coating can be prevented. When the content of the polyurethane resin is less than or equal to the above-described upper limits, the liquid stability is enhanced.

### <Crosslinking agent>

From the viewpoints of safety for a human body and low-temperature reactivity, a crosslinking agent containing at least two or more carbodiimide groups in one molecule is used as the crosslinking agent contained in the aqueous resin composition according to the present invention. When the number of carbodiimide groups in one molecule is less than 2, the carboxylate group in the polyurethane resin cannot be sufficiently crosslinked, and thus desired performance is difficult to obtain.

From the viewpoints of the performance as the adhesive layer and the liquid stability, it is preferable that the crosslinking agent be not completely water-soluble and have a micellar structure surrounded by sterically bulky hydrophilic groups. When the crosslinking agent has a bulky structure that causes steric hindrance, the chance of contact with the polyurethane resin can be reduced.

A known carbodiimide compound can be used as the crosslinking agent in the aqueous resin composition according to the present invention. The carbodiimide compound can be obtained, for example, by carrying out a condensation reaction associated with decarbonization of an organic diisocyanate compound to synthesize an isocyanate-terminal polycarbodiimide compound and reacting a highly hydrophilic organic compound with the isocyanate terminal.

Examples of the highly hydrophilic organic compound include polyalkylene oxide having a terminal blocked with an alkoxy group or a phenoxy group, dialkylamino alcohol, hydroxycarboxylic acid alkyl ester, dialkylaminoalkylamine, and alkyl sulfonate. Among these, from the viewpoint of spatially isolating the carbodiimide group from the polyurethane resin by stably forming micelles in water, polyalkylene oxide having a terminal blocked with an alkoxy group or a phenoxy group is preferable. In this case, micelles surrounded by hydrophilic groups and having a particle diameter of about 10 nm are stably formed, and thus satisfactory liquid stability is considered to be exhibited.

It is preferable that the carbodiimide compound be polycarbodiimide obtained by polymerizing two or more molecules of a diisocyanate compound. Further, an aliphatic or aromatic carbodiimide compound is preferable, and an aliphatic carbodiimide compound is more preferable. The polymerization degree of the carbodiimide compound is preferably 2 or greater. Further, the polymerization degree of the carbodiimide compound is preferably 100 or less and more preferably 10 or less.

Examples of a polymerization unit of the aliphatic carbodiimide compound include 4,4'-dicyclohexylmethane carbodiimide, diisophorone methane carbodiimide, cyclohexylcarbodiimide, isopropylcarbodiimide, methylcarbodiimide, isobutylcarbodiimide, octylcarbodiimide, and t-butylcarbodiimide. Among these, from the viewpoints of low toxicity and liquid stability, it is effective to use a sterically bulky structure, and 4,4'-dicyclohexylmethane carbodiimide, diisophorone methane carbodiimide, or cyclohexylcarbodiimide is preferable, and 4,4'-dicyclohexylmethane carbodiimide is more preferable.

Examples of the polymerization unit of the aromatic carbodiimide compound include phenylcarbodiimide, β-naphthylcarbodiimide, and tetramethylxylylenecarbodiimide. Among these, from the viewpoints of the low toxicity and the liquid stability, tetramethylxylylenecarbodiimide is preferable.

These carbodiimide compounds may be used alone or in the form of a mixture of two or more kinds thereof.

When two or more kinds of carbodiimide compounds are used in the form of a mixture, it is preferable that two or more kinds of carbodiimide compounds with different carbodiimide group equivalents be mixed with each other to achieve the balance between the reactivity and the liquid stability.

The carbodiimide group equivalent is defined as follows as an index of the amount of the carbodiimide group (N=C=N group) in one molecule of the carbodiimide compound. (Carbodiimide group equivalent) = (chemical formula weight of structural unit of carbodiimide compound in one mole of carbodiimide group) (unit: mol-1)

The amount of the carbodiimide group contained in one molecule increases as the carbodiimide group equivalent decreases, and the amount of the carbodiimide group contained in one molecule decreases as the carbodiimide group equivalent increases.

In the first and second embodiments of the present invention, the carbodiimide group equivalent of the crosslinking agent (carbodiimide compound) is preferably 300 mol⁻¹ or greater, more preferably 400 mol⁻¹ or greater, and still more preferably 500 mol⁻¹ or greater and also preferably 800 mol⁻¹ or less and more preferably 700 mol⁻¹ or less. When the carbodiimide group equivalent is greater than or equal to the above-described lower limits, the liquid stability is improved. Further, when the carbodiimide group equivalent is less than or equal to the above-described upper limits, the crosslinking properties are improved.

In the third embodiment of the present invention, the carbodiimide group equivalent of the crosslinking agent (carbodiimide compound) is 400 mol⁻¹ or greater and 700 mol⁻¹ or less and preferably 500 mol⁻¹ or greater and 700 mol⁻¹ or less.

The content of the crosslinking agent in the aqueous resin composition according to the present invention is preferably 1% by mass or greater and more preferably 2% by mass or greater, and also preferably 10% by mass or less and more preferably 5% by mass or less. When the content of the crosslinking agent is greater than or equal to the above-described lower limits, the crosslinking is sufficiently carried out, and the adhesiveness and the durability are improved. When the content of the crosslinking agent is less than or equal to the above-described upper limits, the liquid stability is improved.

In the aqueous resin composition according to the first embodiment of the present invention, the molar ratio of the carbodiimide group contained in the crosslinking agent to the carboxylate group contained in the polyurethane resin is 0.1 or greater and 5.0 or less.

When the molar ratio thereof is 5.0 or less, that is, the amount of the carbodiimide group with respect to the amount of the carboxylate group is not extremely large, the liquid stability of the aqueous resin composition is excellent, contamination such as adhesion due to migration of the carbodiimide compound to a contact member from a non-printing area during printing and degradation of the quality of the printed image due to the contamination are prevented. When the molar ratio thereof is 0.1 or greater, that is, the amount of the carbodiimide group with respect to the amount of the carboxylate group is not extremely small, the performance such as the adhesiveness or the water resistance is enhanced.

That is, in the first embodiment of the present invention, the molar ratio of the carbodiimide group contained in the crosslinking agent to the carboxylate group contained in the polyurethane resin is 0.1 or greater, preferably 0.2 or greater, more preferably 0.3 or greater, and still more preferably 0.5 or greater. Further, the molar ratio thereof is 5.0 or less, preferably 3.0 or less, more preferably 2.0 or less, still more preferably 1.5 or less, and particularly preferably 1.0 or less.

In the aqueous resin composition according to the second embodiment of the present invention, the molar ratio of the carbodiimide group contained in the crosslinking agent to the carboxylate group contained in the polyurethane resin is 0.1 or greater and 2.9 or less, preferably 0.2 or greater, more preferably 0.3 or greater, and still more preferably 0.5 or greater and also preferably 2.0 or less, more preferably 1.5 or less, and still more preferably 1.0 or less.

In the aqueous resin composition according to the third embodiment of the present invention, the molar ratio of the carbodiimide group contained in the crosslinking agent to the carboxylate group contained in the polyurethane resin is 0.4 or greater, preferably 0.5 or greater, also preferably 5.0 or less, more preferably 3.0 or less, still more preferably 2.0 or less, particularly preferably 1.5 or less, and most preferably 1.0 or less.

The amount of the carboxylate group of the polyurethane resin can be converted from the above-described acid value, and the amount of the carbodiimide group of the crosslinking agent can be converted from the carbodiimide group equivalent.

From the viewpoints of the adhesiveness and the durability, the content ratio (mass ratio) of the crosslinking agent to the polyurethane resin is preferably 0.010 or greater and more preferably 0.030 or greater. Further, from the viewpoints of the liquid stability, the contamination in the member, and the image quality, the content ratio thereof is preferably 0.400 or less, more preferably 0.200 or less, still more preferably 0.150 or less, and particularly preferably 0.100 or less.

### <Amine compound>

In the first embodiment of the present invention, the aqueous resin composition contains an amine compound. Further, in the second and third embodiments of the present invention, it is preferable that the aqueous resin composition contain an amine compound.

When the aqueous resin composition contains an amine compound, the amine compound is allowed to be present in the vicinity of the polyurethane resin, and thus an effect of preventing the crosslinking reaction between the urethane resin and the crosslinking agent in the liquid and improving the liquid stability can be expected.

The amine compound contained in the aqueous resin composition according to the first embodiment of the present invention has a pKb of 3.5 or greater and 4.7 or less, preferably a pKb of 4.0 or greater, also preferably a pKb of 4.5 or less, and more preferably a pKb of 4.2 or less.

The amine compound contained in the aqueous resin composition according to the second and third embodiment of the present invention has preferably a pKb of 3.5 or greater and 5.0 or less, more preferably a pKb of 4.0 or greater, more preferably a pKb of 4.7 or less, still more preferably a pKb of 4.5 or less, and particularly preferably a pKb of 4.2 or less.

The pKb denotes a base dissociation constant and is typically used as an index indicating the strength of a base. The strength of the base increases as the value of the pKb decreases.

Typically, ammonia (pKb: 4.75) is suitably used as a neutralizer during the production of a polyurethane resin dispersion liquid. In addition to this, it is preferable that the aqueous resin composition of the present invention contain an amine compound added during the production of the aqueous resin composition. In other words, it is preferable that an amine compound be added to the aqueous resin composition of the present invention during the production of the aqueous resin composition. The reason for this is considered as follows.

Since ammonia has high volatility, ammonia is likely to disappear outside the aqueous resin composition during the production of the aqueous resin composition even when ammonia is used during the production of a polyurethane resin dispersion liquid. Therefore, the polyurethane resin is no longer neutralized in the produced aqueous resin composition, and thus self-dispersibility is decreased, which is one of the causes of a decrease in liquid stability. Accordingly, when an amine compound is added during the production of the aqueous resin composition, the amine compound stably protects the carboxylate group contained in the polyurethane resin and forms a hydrogen bond with a urethane bond group or the like, and thus the polyurethane resin can be stably dispersed in the liquid. Further, the amine compound is present in the vicinity of the dispersed polyurethane resin particles in the form of an electric double layer, and thus an effect of decreasing the reaction rate between the polyurethane resin and the crosslinking agent in the liquid by causing electrical repulsion between the amine compound and the crosslinking agent containing a carbodiimide group in the liquid can also be obtained.

It is not preferable that the pKb of the amine compound is less than the above-described lower limits from the viewpoint of safety for a human body. The effect of stabilizing the liquid may decrease when the pKb thereof is greater than the above-described upper limits.

From the viewpoint of the heat resistance during printing or processing, the amine compound has a boiling point of preferably 130°C or higher and more preferably 151°C or higher. When the amine compound has a boiling point of 130°C or higher, an odor is unlikely to leak out during printing. Further, in a case where the amine compound is used in a printing press having a mechanism to recover and reuse a solvent, generation of an odor or degradation of the printing quality due to the amine compound being mixed into the recovered solvent can be suppressed.

Suitable examples of the amine compound include monoethanolamine (pKb: 4.56, boiling point: 170°C), N,N-diethylethanolamine (pKb: 4.13, boiling point: 163°C), 2-amino-2-methyl-1-propanol (pKb: 4.70, boiling point: 165.5°C), and 2-(dimethylamino)ethanol (pKb: 4.77, boiling point: 133°C). Among these, from the viewpoints of the odor and the liquid stability, N,N-diethylethanolamine or 2-amino-2-methyl-1-propanol is preferable, and N,N-diethylethanolamine is more preferable. These amine compounds may be used alone or in the form of a mixture of two or more kinds thereof.

The content of the amine compound in the aqueous resin composition according to the present invention is preferably 0.1% by mass or greater, more preferably 0.2% by mass or greater, and still more preferably 0.3% by mass or greater and also preferably 5% by mass or less, more preferably 2% by mass, and still more preferably 1% by mass or less. When the content of the amine compound is greater than or equal to the above-described lower limits, the effect of the liquid stability increases. Further, it is preferable that the content of the amine compound be less than or equal to the above-described upper limits in terms of the safety for a human body.

From the viewpoint of the liquid stability, the content ratio (mass ratio) of the amine compound to the polyurethane resin is preferably 0.01 or greater and more preferably 0.02 or greater. Further, from the viewpoint of reducing the odor, the content ratio thereof is preferably 0.1 or less and more preferably 0.06 or less.

From the viewpoint of the liquid stability, the content ratio (mass ratio) of the amine compound to the crosslinking agent is preferably 0.01 or greater and more preferably 0.02 or greater. Further, from the viewpoint of the crosslinking properties, the content ratio thereof is preferably 0.3 or less and more preferably 0.2 or less.

### <Surfactant>

From the viewpoint of assisting uniform application of the aqueous resin composition according to the present invention, the aqueous resin composition of the present invention further contains a surfactant.

Specifically, an anionic surfactant, a cationic surfactant, or a nonionic surfactant can be used as the surfactant. Among these, from the viewpoint of the liquid stability, a nonionic surfactant is preferable.

Preferred examples of the nonionic surfactant include polyethylene glycol fatty acid ester, sorbitan fatty acid ester, sorbitol fatty acid ester, glycerin fatty acid ester, pentaerythritol fatty acid ester, POE alkyl ether, POE alkyl phenyl ethers, POE acetylene glycols, tetra-POE/tetra-POP ethylenediamine condensates, POE hydrogenated castor oil derivatives, POE beeswax derivatives, POE lanolin derivatives, and alkanolamide. These nonionic surfactants can be used alone or in combination of two or more kinds thereof.

Among the above-described examples, from the viewpoint of dispersion stability as the aqueous resin composition, POE alkyl phenyl ethers, POE acetylene glycols, and tetra-POE/tetra-POP ethylenediamine condensates are preferable, and POE acetylene glycols are more preferable. Further, in the above-described examples, "POE" is an abbreviation for "polyoxyethylene", and "POP" is an abbreviation for "polyoxypropylene".

The number average molecular weight of the surfactant is preferably 400 or greater and 3000 or less.

The content of the surfactant in the aqueous resin composition of the present invention is preferably 0.01% by mass or greater, more preferably 0.1% by mass or greater, and still more preferably 0.2% by mass or greater and also preferably 2.0% by mass or less, more preferably 1.5% by mass or less, and still more preferably 1.0% by mass or less. When the content of the surfactant is greater than or equal to the above-described lower limits, the homogeneity and the adhesiveness of the coated film are enhanced. When the content of the surfactant is less than or equal to the above-described upper limits, the liquid stability is enhanced.

From the viewpoints of the homogeneity and the adhesiveness during drying, the content ratio (mass ratio) of the surfactant to the polyurethane resin is preferably 0.001 or greater and more preferably 0.005 or greater. Further, from the viewpoint of the liquid stability, the content ratio thereof is preferably 0.1 or less and more preferably 0.05 or less.

From the viewpoint of coating homogeneity of the crosslinking agent, the content ratio (mass ratio) of the surfactant to the crosslinking agent is preferably 0.01 or greater and more preferably 0.02 or greater. Further, from the viewpoint of the liquid stability of the crosslinking agent, the content ratio thereof is preferably 0.5 or less and more preferably 0.3 or less.

### <Aqueous medium>

The term "aqueous resin composition" in the present invention denotes a composition containing a resin and an aqueous medium. Further, the term "aqueous coating liquid" in the present invention denotes a coating liquid containing an aqueous medium. The aqueous medium is water and/or a water-soluble organic solvent. It is preferable that the aqueous medium used in the present invention be formed of only water, that is, contain no water-soluble organic solvent.

The water-soluble organic solvent in the present invention denotes a compound having solubility in water. The solubility of the water-soluble organic solvent in water is not limited, but a compound that can be dissolved in water at any ratio is preferable. Further, the water-soluble organic solvent includes a compound that can be used as a solvent by being uniformly mixed with water even when the compound alone is difficult to have properties as a solvent (for example, a compound in a solid state at a normal temperature or a compound having a high viscosity).

Examples of the water-soluble organic solvent include methanol, ethanol, propanol, ethylene glycol, propylene glycol, ethylene glycol dimethyl ether, propylene glycol dimethyl ether, N-methylpyrrolidone, and N,N-dimethylformamide. These water-soluble organic solvents may be used alone or in the form of a mixture of two or more kinds thereof.

### <Other additives>

An antioxidant, a fungicide, an ultraviolet absorbing agent, a dispersion assistant, a wetting agent (moisturizing agent), a fixing agent, a pH adjuster, a thickener, a colorant, a deodorant, a flavoring agent, or the like can be added to the aqueous resin composition of the present invention within a range where the effects of the present invention are not impaired.

### [Method of producing aqueous resin composition]

A known production method can be employed for production of the aqueous resin composition according to the present invention. As the method of producing the aqueous resin composition according to the present invention, a production method of preparing a polyurethane resin dispersion liquid in advance, adding a crosslinking agent and an amine compound thereto, and mixing the mixture is preferable.

The method of producing the polyurethane resin dispersion liquid is not particularly limited, but it is preferable that the polyurethane resin dispersion liquid be produced by a prepolymer production step, an emulsification step, and a chain extension step. In this case, since the self-emulsifying properties are exhibited by neutralizing the carboxylate group in the polyurethane structure in the emulsification step, it is preferable to use a neutralizer. It is preferable to use ammonia or an amine compound and more preferable to use ammonia as the neutralizer.

A known method can be employed as a mixing method in the production of the aqueous resin composition according to the present invention. For example, a method of stirring mixing using a typical anchor blade or a typical turbine blade, or a dispersion mixing method of applying a shearing force using a homogenizer, a homomixer, an attritor, a sand grinder, or high-pressure liquid collision can be used. From the viewpoint of maintaining the dispersibility of the liquid, a method of stirring mixing, in which a shearing force is not applied, is preferable.

The temperature of mixing raw materials in the production of the aqueous resin composition is preferably 10°C or higher and 40°C or lower and more preferably 15°C or higher and 30°C or lower.

### [Coating method]

For example, a part or the entire surface of a printing medium is coated with the aqueous resin composition according to the present invention before printing, that is, before application of an ink or a toner, in order to form an adhesive layer.

When a printing medium is coated, rubber roll coating, die coating, microgravure coating, slit reverse coating, anilox roll coating, or the like is suitably used to form a homogeneous coated film at a high speed.

It is preferable that the aqueous resin composition after the application be dried such that water is as completely removed as possible, and an appropriate blast intensity and an appropriate drying temperature based on the heat resistance of the printing medium are set. The drying temperature is preferably 50°C or higher and more preferably 60°C or higher, and also preferably 80°C or lower and more preferably 70°C or lower.

The film thickness of the adhesive layer after being suitably dried is preferably 0.05 µm or greater, more preferably 0.1 µm or greater, and still more preferably 0.15 um or greater and also preferably 2 um or less, more preferably 1 µm or less, and still more preferably 0.6 µm or less.

### [Printing medium]

Examples of the printing medium on which coating or printing is performed include a metal substrate such as aluminum, nickel, stainless steel, or magnesium, a flexible substrate such as polyethylene, polypropylene, polyethylene terephthalate, polyethylene naphthalate, polyamide, polyurethane, polyvinyl chloride, or a thermoplastic elastomer, a medium obtained by laminating any of these and aluminum foil, vapor-deposited aluminum, or vapor-deposited silicon oxide, glass or a natural material, and paper coated with a resin such as polyethylene coated paper. When the printing medium is a flexible substrate, a stretched product, a porous product, or a foamed product may be used.

### [Ink]

From the viewpoint of the reactivity with the carbodiimide group contained in the crosslinking agent of the aqueous resin composition according to the present invention, it is preferable that an ink or a toner used for printing contain a resin containing a carboxy group. in this case, it is preferable that the resin containing a carboxy group be a main component of the ink or the toner. Further, "main component" denotes a resin that occupies 50% by mass or greater in the resins contained in the ink or the toner.

Examples of the resin containing a carboxy group include a poly(ethylene/methacrylic acid) resin, a poly(ethylene/acrylic acid)resin, a polyester resin, a poly(styrene/acrylic acid) resin, and a polymethyl acrylate resin. Among these, a poly(ethylene/methacrylic acid) resin or a poly(ethylene/acrylic acid) resin is preferable.

From the viewpoint of fixing to various printing media, the softening point of the resin containing a carboxy group is preferably 120°C or lower and more preferably 100°C or lower. When the softening point thereof is 120°C or lower, failure such as thermal deformation or thermal melting of a printing medium when an ink is fixed to the printing medium can be suppressed.

An aliphatic hydrocarbon-based organic solvent having a high boiling point of about 200°C is preferably used as a carrier liquid of the ink.

### [Image forming method (printing method)]

The aqueous resin composition according to the present invention is used, for example, in an electrophotographic digital printing press as shown in Fig. 1, and printing is performed after an adhesive layer is formed by using the aqueous resin composition to produce a printed material.

A digital printing press includes, for example, a printing medium unwinding unit 10, an adhesive layer coating unit 1, a printing unit 2, a printing press control unit 100, and a printing medium winding unit 111. Hereinafter, a printing method using the digital printing press of Fig. 1 will be described.

First, a printing medium 11 unwound from the printing medium unwinding unit 10 is subjected to a corona treatment in a corona treatment unit 12 of the adhesive layer coating unit 1 so that the surface energy is corrected to be appropriate for printing. Thereafter, the printing medium 11 is allowed to pass through a coating bath 13 containing an aqueous resin composition 14 to coating rolls 15 to 17 so that the printing medium 11 is coated with the aqueous resin composition, the aqueous resin composition is dried in the drying unit 18, and thus an adhesive layer having a predetermined film thickness is formed.

Next, digital image data of the printing press control unit 100 is converted into a light pattern by an exposure device 102, and the light pattern is applied to a photoreceptor 105 that has been uniformly charged by a charging device 101 in advance. An ink which is a developer supplied from a developer tank 103 to the electrostatic latent image formed by this process is developed on the photoreceptor 105 by a developing device 104. The developer developed on the photoreceptor 105 is primarily transferred to an intermediate transfer member 107 by an electrostatic force. Further, the excess developer on the photoreceptor 105 is removed by a cleaning device 106 after the developer is transferred to the intermediate transfer member 107, and the process proceeds to next image formation.

The developer primarily transferred to the intermediate transfer member 107 from the photoreceptor 105 is dried and melted by an internal heater 109 and an external heater 108 of the intermediate transfer member 107, secondarily transferred to the printing medium 11 on which the adhesive layer has been formed by a pressure roll 110, and fixed thereto to form a desired image, and a printed material is wound by the printing medium winding unit 111.

The solvent (carrier liquid) generated when the ink used in the present printing press is dried may be recovered in the printing press and reused. In this case, it is necessary that the components of the aqueous resin composition according to the present invention are not mixed into the recovered carrier liquid and particularly important that the amine compound is not mixed into the recovered carrier liquid.

As described above, when the digital printing type image forming method of coating a printing medium with the aqueous resin composition to form an adhesive layer and forming an ink layer with an ink is employed, and the aqueous resin composition contains a polyurethane resin containing a carboxylate group and a crosslinking agent containing at least two or more carbodiimide groups in one molecule, the durability in the printed material after coating and particularly solvent resistance are enhanced.

### [Printed material]

An adhesive layer can be formed by coating the printing medium with the aqueous resin composition according to the present invention, and heating and drying the aqueous resin composition. Further, a printed material can be obtained by coating the adhesive layer with an ink or drying the ink after transfer of the ink onto the adhesive layer to form an ink layer.

The adhesive layer in the printed material has a crosslinked structure of the polyurethane resin containing a carboxylate group and the crosslinking agent containing a carbodiimide group. In this manner, the durability and particularly the solvent resistance in the printed material can be exhibited.

When an ink layer is formed on the adhesive layer, the crosslinked structure may be formed by bringing the adhesive layer and the ink layer into contact with each other so that the adhesive layer and the ink layer are partially mixed, to react the carbodiimide group of the adhesive layer with the carboxy group of the resin in the ink layer. In this manner, the adhesiveness between the adhesive layer and the ink layer can be improved. Further, it is considered that even when the entire carbodiimide group in the adhesive layer reacts with the polyurethane resin in the adhesive layer and does not react with the carboxy group of the resin in the ink layer, the affinity between the adhesive layer and the ink layer increases due to the effect of an acylurea group which is a bond generated by the reaction between the carbodiimide compound and the polyurethane resin, and thus the adhesiveness between the adhesive layer and the ink layer can be improved.

### EXAMPLES

Hereinafter, the first, second, and third embodiments of the present invention will be described in more detail based on examples.

The following examples are shown to describe the present invention in detail, but the present invention is not limited to the examples described below and can be implemented by being optionally modified within a range not departing from the gist of the present invention.

In the examples described below, the polyurethane resin dispersion liquid is also abbreviated as PUD, the biaxially oriented polypropylene is also abbreviated as BOPP, and the oriented polyester is also abbreviated as PET.

### [Experimental Example 1]

### <Production of aqueous resin composition 1>

777.1 g of a saturated hydrocarbon-based polyether polyurethane resin dispersion liquid (trade name, NeoRez R600, manufactured by DSM, solid content of 33%, acid value of 13 mgKOH/g, using ammonia as neutralizer during production), 80.1 g of an aliphatic carbodiimide compound (compound obtained by mixing CARBODILITE SV-02 (trade name) and CARBODILITE V-02-L2 (trade name) shown below at mass ratio of 3:1) as a crosslinking agent, 6.5 g of N,N-diethylethanolamine (also referred to as DEEA, pKb: 4.13) as an amine compound, 5.0 g of SURFYNOL 465 (also referred to as S465, manufactured by Nissin Chemical Co., Ltd.) having a structure represented by Formula (1) as a surfactant, and 131.3 g of dilution water were mixed, thereby producing 1000 g of an aqueous resin composition 1.
CARBODILITE SV-02: manufactured by Nisshinbo Chemical Inc., solid content of 40%, carbodiimide group equivalent of 430 mol⁻¹
CARBODILITE V-02-L2: manufactured by Nisshinbo Chemical Inc., solid content of 40%, carbodiimide group equivalent of 385 mol⁻¹

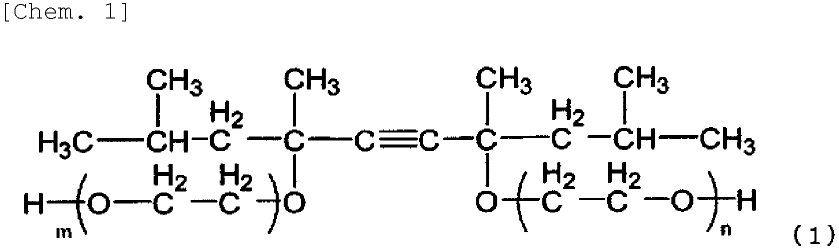

### [Experimental Example 2]

### <Production of aqueous resin composition 2>

1000 g of an aqueous resin composition 2 was produced in the same manner as in the production of the aqueous resin composition 1 except that the aliphatic carbodiimide compound was changed to 80.1 g of a compound obtained by mixing CARBODILITE V-02 (trade name) and CARBODILITE V-02-L2 (trade name) shown below at a mass ratio 3:1.
CARBODILITE V-02: manufactured by Nisshinbo Chemical Inc., solid content of 40%, carbodiimide group equivalent of 590 mol⁻¹
CARBODILITE V-02-L2: manufactured by Nisshinbo Chemical Inc., solid content of 40%, carbodiimide group equivalent of 385 mol⁻¹

### [Experimental Example 3]

### <Production of aqueous resin composition 3>

1000 g of an aqueous resin composition 3 was produced in the same manner as in the production of the aqueous resin composition 1 except that the addition amount of the saturated hydrocarbon-based polyether polyurethane resin dispersion liquid was changed to 760.2 g, the carbodiimide compound was changed to 94.1 g of CARBODILITE V-02 (trade name, manufactured by Nisshinbo Chemical Inc., solid content of 40%, carbodiimide group equivalent of 590 mol⁻¹), and the addition amount of dilution water was changed to 134.2 g.

### [Experimental Example 4]

### <Production of aqueous resin composition 4>

1000 g of an aqueous resin composition 4 was produced in the same manner as in the production of the aqueous resin composition 1 except that the amount of the carbodiimide compound was changed to 80.1 g of CARBODILITE V-02 (trade name, manufactured by Nisshinbo Chemical Inc., solid content of 40%, carbodiimide group equivalent of 590 mol⁻¹).

### [Experimental Example 5]

### <Production of aqueous resin composition 5>

An aqueous resin composition 5 was produced in the same manner as in the production of the aqueous resin composition 4 except that the amine compound was changed to 6.5 g of N,N-dimethylethanolamine (also referred to as DMEA, pKb: 4.77) .

### [Experimental Example 6]

### <Production of aqueous resin composition 6>

An aqueous resin composition 6 was produced in the same manner as in the production of the aqueous resin composition 4 except that the addition amount of the saturated hydrocarbon-based polyether polyurethane resin dispersion liquid was changed to 767.7 g, the addition amount of the carbodiimide compound was changed to 79.2 g, the amine compound was changed to 10.0 g of 2-amino-2-methyl-1-propanol (also referred to as AMP, pKb: 4.70), and the addition amount of dilution water was changed to 138.2 g.

### [Experimental Examples 7 to 10]

### <Production of aqueous resin compositions 7 to 10>

1000 g of each of aqueous resin compositions 7 to 10 was produced in the same manner as in the production of the aqueous resin composition 3 except that the addition amount of each material was changed to the amount listed in Table 1A.

### [Experimental Examples 11 to 14]

### <Production of aqueous resin compositions 11 to 14>

1000 g of each of aqueous resin compositions 11 to 14 was produced in the same manner as in the production of the aqueous resin composition 1 except that the addition amount of each material was changed to the amount listed in Table 1B.

### [Experimental Example 15]

### <Production of aqueous resin composition 15>

1000 g of an aqueous resin composition 15 was produced in the same manner as in the production of the aqueous resin composition 1 except that the amine compound was not used and the addition amounts of other materials were changed to the amounts listed in Table 1B.

### [Experimental Example 16]

### <Production of aqueous resin composition 16>

1000 g of an aqueous resin composition 16 was produced in the same manner as in the production of the aqueous resin composition 4 except that the amine compound was not used and the addition amounts of other materials were changed to the amounts listed in Table 1B.

### [Experimental Example 17]

### <Production of aqueous resin composition 17>

1000 g of an aqueous resin composition 17 was produced in the same manner as in the production of the aqueous resin composition 4 except that the amine compound was changed to N,N,N-triethanolamine (also referred to as TETA, pKb: 6.23) and the addition amount of each material was changed to the amount listed in Table 1B.

### [Experimental Example 18]

### <Production of aqueous resin composition 18>

1000 g of an aqueous resin composition 18 was produced in the same manner as in the production of the aqueous resin composition 4 except that the amine compound was changed to N,N,-diethanolamine (also referred to as DEA, pKb: 5.12) and the addition amount of each material was changed to the amount listed in Table 1B.

### [Experimental Example 19]

### <Production of aqueous resin composition 19>

1000 g of an aqueous resin composition 19 was produced in the same manner as in the production of the aqueous resin composition 4 except that the amine compound was changed to triethylamine (also referred to as TEA, pKb: 3.25, boiling point of 89°C) and the addition amount of each material was changed to the amount listed in Table 1B.

### [Experimental Example 20]

### <Production of aqueous resin composition 20>

1000 g of an aqueous resin composition 20 was produced in the same manner as in the production of the aqueous resin composition 1 except that the crosslinking agent was not used and the addition amount of each material was changed to the amount listed in Table 1B.

### [Experimental Example 21]

### <Production of aqueous resin composition 21>

1000 g of an aqueous resin composition 21 was produced by mixing 656.3 g of a polyurethane resin dispersion liquid (trade name, Hydran AP201, manufactured by DIC Corporation, solid content of 23%, acid value of 25 mgKOH/g, using triethylamine as neutralizer during production) containing an aromatic polyester-based polyol as one of the raw materials, 218.9 g of an aliphatic carbodiimide compound (compound obtained by mixing CARBODILITE SV-02 (trade name) and CARBODILITE V-02-L2 (trade name) at mass ratio 1:1) as a crosslinking agent, 5.0 g of SURFYNOL 465 (also referred to as S465, manufactured by Nissin Chemical Co., Ltd.) having a structure represented by Formula (1) as a surfactant, and 113.3 g of dilution water.

### [Experimental Example 22]

### <Production of aqueous resin composition 22>

1000 g of an aqueous resin composition 22 was produced in the same manner as in the production of the aqueous resin composition 1 except that the surfactant was not used and the addition amount of each material was changed to the amount listed in Table 1B.

**[Table 1A]**

| Aqueous resin composition No. | PUD | | | Crosslinking agent | | | Amine compound | | Surfactant | | Dilution water (g) | Aqueous resin composition | |
|---|---|---|---|---|---|---|---|---|---|---|---|---|---|
| | Trade name | Used amount (dispersion liquid) (g) | Used amount (solid content) (g) | Trade name (mass ratio) | Used amount (dispersion liquid) (g) | Used amount (solid content) (g) | Abbreviation (pKb) | Used amount (g) | Abbreviation | Used amount (g) | | Total amount (g) | Concentration of non-volatile component (mass%) |
| 1 | R600 | 777.1 | 256.4 | SV-02/V-02-L2 (3:1) | 80.1 | 32.1 | DEEA (4.13) | 6.5 | S465 | 5.0 | 131.3 | 1000.0 | 30.0 |
| 2 | R600 | 777.1 | 256.4 | V-02/V-02-L2 (3:1) | 80.1 | 32.1 | DEEA (4.13) | 6.5 | S465 | 5.0 | 131.3 | 1000.0 | 30.0 |
| 3 | R600 | 760.2 | 250.9 | V-02 | 94.1 | 37.6 | DEEA (4.13) | 6.5 | S465 | 5.0 | 134.2 | 1000.0 | 30.0 |
| 4 | R600 | 777.1 | 256.4 | V-02 | 80.1 | 32.1 | DEEA (4.13) | 6.5 | S465 | 5.0 | 131.3 | 1000.0 | 30.0 |
| 5 | R600 | 777.1 | 256.4 | V-02 | 80.1 | 32.1 | DMEA (4.77) | 6.5 | S465 | 5.0 | 131.3 | 1000.0 | 30.0 |
| 6 | R600 | 767.7 | 253.3 | V-02 | 79.2 | 31.7 | AMP (4.70) | 10.0 | S465 | 5.0 | 138.2 | 1000.0 | 30.0 |
| 7 | R600 | 798.4 | 263.5 | V-02 | 62.6 | 25.0 | DEEA (4.13) | 6.5 | S465 | 5.0 | 127.5 | 1000.0 | 30.0 |
| 8 | R600 | 809.5 | 267.1 | V-02 | 53.4 | 21.4 | DEEA (4.13) | 6.5 | S465 | 5.0 | 125.6 | 1000.0 | 30.0 |
| 9 | R600 | 840.6 | 277.4 | V-02 | 27.7 | 11.1 | DEEA (4.13) | 6.5 | S465 | 5.0 | 120.1 | 1000.0 | 30.0 |
| 10 | R600 | 699.4 | 230.8 | SV-02/V-02-L2 (3:1) | 144.3 | 57.7 | DEEA (4.13) | 6.5 | S465 | 5.0 | 144.9 | 1000.0 | 30.0 |

**[Table 1B]**

| Aqueous resin composition No. | PUD | | | Crosslinking agent | | | Amine compound | | Surfactant | | Dilution water (g) | Aqueous resin composition | |
|---|---|---|---|---|---|---|---|---|---|---|---|---|---|
| | Trade name | Used amount (dispersion liquid) (g) | Used amount (solid content) (g) | Trade name (mass ratio) | Used amount (dispersion liquid) (g) | Used amount (solid content) (g) | Abbreviation (pKb) | Used amount (g) | Abbreviation | Used amount (g) | | Total amount (g) | Concentration of non-volatile component (mass%) |
| 11 | R600 | 643.4 | 212.3 | SV-02/V-02-L2 (3:1) | 265.4 | 106.2 | DEEA (4.13) | 6.5 | S465 | 5.0 | 79.6 | 1000.0 | 33.0 |
| 12 | R600 | 610.9 | 201.6 | SV-02/V-02-L2 (1:1) | 292.3 | 116.9 | DEEA (4.13) | 6.5 | S465 | 5.0 | 85.4 | 1000.0 | 33.0 |
| 13 | R600 | 497.7 | 164.3 | SV-02/V-02-L2 (1:1) | 410.6 | 164.3 | DEEA (4.13) | 6.5 | S465 | 5.0 | 80.1 | 1000.0 | 34.0 |
| 14 | R600 | 331.8 | 109.5 | SV-02/V-02-L2 (3:1) | 547.5 | 219.0 | DEEA (4.13) | 6.5 | S465 | 5.0 | 109.2 | 1000.0 | 34.0 |
| 15 | R600 | 794.6 | 262.2 | SV-02/V-02-L2 (3:1) | 81.9 | 32.8 | - | 00 | S465 | 5.0 | 118.4 | 1000.0 | 30.0 |
| 16 | R600 | 794.6 | 262.2 | V-02 | 81.9 | 32.8 | - | 00 | S465 | 5.0 | 118.4 | 1000.0 | 30.0 |
| 17 | R600 | 767.7 | 253.3 | V-02 | 79.2 | 31.7 | TETA (6.23) | 10.0 | S465 | 5.0 | 138.2 | 1000.0 | 30.0 |
| 18 | R600 | 767.7 | 253.3 | V-02 | 79.2 | 31.7 | DEA (5.12) | 10.0 | S465 | 5.0 | 138.2 | 1000.0 | 30.0 |
| 19 | R600 | 767.7 | 253.3 | V-02 | 79.2 | 31.7 | TEA (3.25) | 10.0 | S465 | 5.0 | 138.2 | 1000.0 | 30.0 |
| 20 | R600 | 874.2 | 288.5 | - | - | - | DEEA (4.13) | 6.5 | S465 | 5.0 | 114.3 | 1000.0 | 30.0 |
| 21 | AP201 | 656.3 | 150.9 | SV-02/V-02-L2 (1:1) | 218.9 | 87.6 | - | 00 | S465 | 5.0 | 113.3 | 1000.0 | 25.0 |
| 22 | R600 | 790.6 | 260.9 | SV-02/V-02-L2 (3:1) | 81.5 | 32.6 | DEEA (4.13) | 6.5 | - | - | 121.4 | 1000.0 | 30.0 |

### [Evaluation method]

Evaluation methods of evaluating the adhesiveness, evaluating the water resistance, evaluating the solvent resistance, and evaluating the liquid stability (evaluating the viscosity after storage) of the aqueous resin composition obtained in each of the experimental examples and evaluation methods of evaluating the adhesiveness, evaluating the image quality, and evaluating the odor when the aqueous resin composition after storage was used will be described below.

### <Evaluation of adhesiveness>

A BOPP film (film thickness of 20 µm, subjected to corona treatment, surface free energy: 38 mN/m or greater) and a PET film (film thickness of 12 µm) were respectively coated with the aqueous resin composition obtained in each of the experimental examples using a bar coater, and the composition was dried and further dried at 50°C for 10 seconds, thereby preparing an adhesive layer having a film thickness of about 1 um. Thereafter, the adhesive layer was coated with a black ink containing a poly(ethylene/methacrylic acid) resin (trade name, N1050H, manufactured by Dow-Mitsui Polychemicals Co., Ltd., softening point of 95°C) using a wire bar such that the film thickness after drying reached about 5 µm, and the black ink was dried at 60°C for 2 minutes to form an ink layer, thereby obtaining a sample for evaluation.

A tape peel test was performed on the obtained sample for evaluation using masking tape (trade name: Scotch (registered trademark) Mending Tape 810, manufactured by 3M Company) in conformity with ASTM D3330, and the adhesiveness was evaluated according to the following evaluation criteria.

### <Evaluation of water resistance>

A sample having the same specifications as the specifications of the sample for evaluation which had been used in the evaluation of the adhesiveness was immersed in water at room temperature for 2 hours and taken out, water was wiped off, a tape peel test was performed on the sample in the same manner as in the evaluation of the adhesiveness, and the water resistance was evaluated according to the following evaluation criteria.

### <Evaluation of solvent resistance>

A sample having the same specifications as the specifications of the sample for evaluation which had been used in the evaluation of the adhesiveness was immersed in acetone at room temperature for 30 minutes, taken out, and dried with air, a tape peel test was performed on the sample in the same manner as in the evaluation of the adhesiveness, and the solvent resistance was evaluated according to the following evaluation criteria.

### <Evaluation of liquid stability (evaluation of viscosity after storage)>

The aqueous resin composition obtained in each of the experimental examples was placed in an oven at 40°C and stored for 14 days, taken out, allowed to stand, and returned to room temperature, the viscosity thereof was measured using a B-type viscometer and compared with the viscosity before the aqueous resin composition was heated, and the liquid stability was evaluated according to the following evaluation criteria.

### <Evaluation of adhesiveness when aqueous resin composition after storage was used>

The aqueous resin composition obtained in each of the experimental examples was placed in an oven at 40°C, stored for 14 days, taken out, allowed to stand, and returned to room temperature, a sample for evaluation was prepared in the same manner as in the adhesive test using the aqueous resin composition, and the adhesiveness to the BOPP film and the PET film was evaluated according to the following evaluation criteria.

### <Evaluation of image quality>

1000 g of the aqueous resin composition obtained in each of the experimental examples was put into a coating tray of an inline primer coating machine of an electrophotographic liquid development printing press (trade name, HP Indigo WS6600, manufactured by HP Inc.), the entire surface of a BOPP film (film thickness of 20 µm, subjected to corona treatment, surface free energy: 38 mN/m or greater) and the entire surface of a PET film (film thickness of 12 µm) were respectively coated with the aqueous resin composition and dried in a state where liquid circulation was stopped, about 100 m of test patterns were respectively printed, and the image quality was evaluated according to the following evaluation criteria.

### <Evaluation of odor>

The odor (amine odor) on the upper portion of the coating tray of the inline primer coating machine was confirmed during the image quality evaluation test, and evaluated according to the following evaluation criteria.

### [Evaluation and evaluation criteria in first embodiment]

In the first embodiment of the present invention, evaluation of the adhesiveness, evaluation of the water resistance, evaluation of the solvent resistance, evaluation of the liquid stability (evaluation of the viscosity after storage), evaluation of the adhesiveness when the aqueous resin composition after storage was used, evaluation of the image quality, and evaluation of the odor were performed using the aqueous resin composition obtained in each of the experimental examples by the above-described methods. The evaluation criteria for each evaluation are described below. Further, the evaluation results are listed in Tables 2A and 2B.

### <Evaluation of adhesiveness>

++: The residual ratios of both the BOPP film and the PET film were 80% or greater.
+: The residual ratio of any one of the BOPP film or the PET film was 80% or greater, and the residual ratio of the other film was 60% or greater and less than 80%.
-: The residual ratios of both the BOPP film and the PET film were 60% or greater and less than 80%.
--: The residual ratio of any one of the BOPP film or the PET film was less than 60%, and the residual ratio of the other film was 60% or greater and less than 80%.
---: The residual ratios of both the BOPP film and the PET film were less than 60%.

The rank of + or higher was considered as "acceptable".

### <Evaluation of water resistance>

The same evaluation criteria as in the evaluation of the adhesiveness were used.

### <Evaluation of solvent resistance>

The same evaluation criteria as in the evaluation of the adhesiveness were used.

### <Evaluation of liquid stability (evaluation of viscosity after storage)>

+++: A change in viscosity of the liquid was less than 20%.
++: A change in viscosity of the liquid was 20% or greater and less than 40%.
+: A change in viscosity of the liquid was 40% or greater, but the liquid had fluidity.
-: The liquid was gelled, and as a result, the measurement of the viscosity was not made.

The rank of + or higher was considered as "acceptable".

### <Evaluation of adhesiveness when aqueous resin composition after storage was used>

The same evaluation criteria as in the evaluation of the adhesiveness were used.

The coating liquids of Experimental Examples 11 to 13 had a high viscosity, which were not suitable for coating, and as a result, the evaluation according to the above-described evaluation criteria was not made.

### <Evaluation of image quality>

++: The image quality was satisfactory, and the adhesive layer and/or the ink layer did not remain on the intermediate transfer member.
+: The image quality was satisfactory, and the adhesive layer and/or the ink layer slightly remained on the intermediate transfer member, but the layers were easily removed.
-: Defects were found in the image quality, and the adhesive layer and/or the ink layer remained on the intermediate transfer member, but the layers were easily removed.
--: Defects were found in the image quality, and the adhesive layer and/or the ink layer remained on the intermediate transfer member, and the layers were not easily removed.

The rank of + or higher was considered as "acceptable".

In Experimental Examples 11 to 13, 15 to 18, 21, and 22, the evaluation was not performed.

### <Evaluation of odor>

++: No odor was sensed.
+: A slight odor was sensed.
-: An odor was sensed.

The rank of ++ or higher was considered as "acceptable".

In Experimental Examples 11 to 13, 15 to 18, 21, and 22, the evaluation was not performed.

**[Table 2A]**

| | | PUD | Crosslinking agent (mass ratio) | Content ratio (mass ratio) of crosslinking agent/polyurethane resin | Carbodiimide group/carboxylate group (molar ratio) | Amine compound (pKb) | Surfactant | Adhesiveness | Water resistance | Solvent resistance | Liquid stability | Adhesiveness after storage | Image quality | Odor |
|---|---|---|---|---|---|---|---|---|---|---|---|---|---|---|
| Experimental Example 1 | Example | R600 | SV-02/V-02-L2 (3:1) | 0.125 | 1.3 | DEEA (4.13) | S465 | ++ | + | ++ | ++ | + | ++ | ++ |
| Experimental Example 2 | | R600 | V-02/V-02-L2 (3:1) | 0.125 | 1.1 | DEEA (4.13) | S465 | ++ | + | ++ | ++ | + | ++ | ++ |
| Experimental Example 3 | | R600 | V-02 | 0.150 | 1.1 | DEEA (4.13) | S465 | ++ | ++ | ++ | +++ | ++ | ++ | ++ |
| Experimental Example 4 | | R600 | V-02 | 0.125 | 0.9 | DEEA (4.13) | S465 | ++ | ++ | ++ | +++ | ++ | ++ | ++ |
| Experimental Example 5 | Comparative Example | R600 | V-02 | 0.125 | 0.9 | DMEA (4.77) | S465 | ++ | ++ | ++ | ++ | ++ | ++ | + |
| Experimental Example 6 | Example | R600 | V-02 | 0.125 | 0.9 | AMP (4.70) | S465 | ++ | ++ | ++ | +++ | ++ | ++ | ++ |
| Experimental Example 7 | | R600 | V-02 | 0.095 | 0.7 | DEEA (4.13) | S465 | ++ | ++ | ++ | +++ | ++ | ++ | ++ |
| Experimental Example 8 | | R600 | V-02 | 0.080 | 0.6 | DEEA (4.13) | S465 | ++ | ++ | ++ | +++ | ++ | ++ | ++ |
| Experimental Example 9 | | R600 | V-02 | 0.040 | 0.3 | DEEA (4.13) | S465 | + | + | + | +++ | ++ | + | ++ |
| Experimental Example 10 | | R600 | SV-02/V-02-L2 (3:1) | 0.250 | 2.6 | DEEA (4.13) | S465 | + | + | ++ | + | + | + | ++ |

**[Table 2B]**

| | | PUD | Crosslinking agent (mass ratio) | Content ratio (mass ratio) of crosslinking agent/polyurethane resin | Carbodiimide group/carbaxylate group (molar ratio) | Amine compound (pKb) | Surfactant | Adhesiveness | Water resistance | Solvent resistance | Liquid stability | Adhesiveness after storage | Image quality | Odor |
|---|---|---|---|---|---|---|---|---|---|---|---|---|---|---|
| Experimental Example 11 | Comparative Example | R600 | SV-02A/-02-L2 (3:1) | 0.500 | 5.2 | DEEA (4.13) | S465 | + | + | ++ | - | Impossible to evaluate | | |
| Experimental Example 12 | | R600 | SV-02A/-02-L2 (1:1) | 0.580 | 6.1 | DEEA (4.13) | S465 | + | + | ++ | - | Impossible to evaluate | | |
| Experimental Example 13 | | R600 | SV-02A/-02-L2 (1:1) | 1.000 | 10.3 | DEEA (4.13) | S465 | ++ | ++ | ++ | - | Impossible to evaluate | | |
| Experimental Example 14 | | R600 | SV-02/V-02-L2 (3:1) | 2.000 | 20.7 | DEEA (4.13) | S465 | ++ | ++ | ++ | +++ | - | - | ++ |
| Experimental Example 15 | | R600 | SV-02/V-02-L2 (3:1) | 0.125 | 1.3 | - | S465 | ++ | + | ++ | + | - | | |
| Experimental Example 16 | | R600 | V-02 | 0.125 | 0.9 | - | S465 | ++ | ++ | ++ | + | - | | |
| Experimental Example 17 | | R600 | V-02 | 0.125 | 0.9 | TETA (6.23) | S465 | ++ | ++ | ++ | + | - | | |
| Experimental Example 18 | | R600 | V-02 | 0.125 | 0.9 | (5.12) | S465 | ++ | ++ | ++ | + | | | |
| Experimental Example 19 | | R600 | V-02 | 0.125 | 0.9 | TEA (3.25) | S466 | ++ | ++ | ++ | ++ | + | + | - |
| Experimental Example 20 | | R600 | - | 0.000 | - | DEEA (4.13) | S465 | - | - | - | +++ | - | - | + |
| Experimental Example 21 | | AP201 | SV-02/V-02-L2 (1:1) | 0.580 | 1.7 | - | S465 | - | - | + | - | + | | |
| Experimental Example 22 | | R600 | SV-02/V-02-L2 (3:1) | 0.125 | 1.3 | DEEA (4.13) | - | - | - | + | + | -- | | |

### [Consideration]

As listed in Tables 2A and 2B, it was found that when a printing medium was coated with the aqueous resin composition according to the first embodiment of the present invention to form an adhesive layer, and printing was performed on the adhesive layer, the adhesiveness between the printing medium and the adhesive layer and the adhesiveness between the adhesive layer and the ink layer were satisfactory, the durability of the printed material was satisfactory, and the image quality was also satisfactory. Further, even when the aqueous resin composition was stored at a high temperature, the aqueous resin composition was not thickened, and the adhesiveness of the printed material was satisfactory even in a case of being coated with the aqueous resin composition after storage. Further, the odor during the printing was also at a level that was not problematic at all.

### [Evaluation and evaluation criteria in second embodiment]

In the second embodiment of the present invention, evaluation of the adhesiveness, evaluation of the water resistance, evaluation of the solvent resistance, evaluation of the liquid stability (evaluation of the viscosity after storage), and evaluation of the image quality were performed using the aqueous resin composition obtained in each of the experimental examples by the above-described methods. The evaluation criteria are described below. Further, the evaluation results are listed in Tables 3A and 3B.

### <Evaluation of adhesiveness>

++: The residual ratios of both the BOPP film and the PET film were 80% or greater.
+: The residual ratio of any one of the BOPP film or the PET film was 80% or greater, and the residual ratio of the other film was 60% or greater and less than 80%.
-: The residual ratios of both the BOPP film and the PET film were 60% or greater and less than 80%.
--: The residual ratio of any one of the BOPP film or the PET film was less than 60%, and the residual ratio of the other film was 60% or greater and less than 80%.
---: The residual ratios of both the BOPP film and the PET film were less than 60%.

The rank of + or higher was considered as "acceptable".

### <Evaluation of water resistance>

The same evaluation criteria as in the evaluation of the adhesiveness were used.

### <Evaluation of solvent resistance>

The same evaluation criteria as in the evaluation of the adhesiveness were used.

### <Evaluation of liquid stability (evaluation of viscosity after storage)>

+++: A change in viscosity of the liquid was less than 20%.
++: A change in viscosity of the liquid was 20% or greater and less than 40%.
+: A change in viscosity of the liquid was 40% or greater, but the liquid had fluidity.
-: The liquid was gelled, and as a result, the measurement of the viscosity was not made.

The rank of + or higher was considered as "acceptable".

### <Evaluation of image quality>

++: The image quality was satisfactory, and the adhesive layer and/or the ink layer did not remain on the intermediate transfer member.
+: The image quality was satisfactory, and the adhesive layer and/or the ink layer slightly remained on the intermediate transfer member, but the layers were easily removed.
-: Defects were found in the image quality, and the adhesive layer and/or the ink layer remained on the intermediate transfer member, but the layers were easily removed.
--: Defects were found in the image quality, and the adhesive layer and/or the ink layer remained on the intermediate transfer member, and the layers were not easily removed.

The rank of + or higher was considered as "acceptable".

In Experimental Examples 11 to 13, 15 to 18, 21, and 22, the evaluation was not performed.

**[Table 3A]**

| | | PUD | Crosslinking agent (mass ratio) | Content ratio (mass ratio) of crosslinking agent/polyurethane resin | Carbodiimide group/carboxylate group (molar ratio) | Amine compound (pKb) | Surfactant | Adhesiveness | Water resistance | Solvent resistance | Liquid stability | Image quality |
|---|---|---|---|---|---|---|---|---|---|---|---|---|
| Experimental Example 1 | Example | R600 | SV-02/V-02-L2 (3:1) | 0.125 | 1.3 | DEEA (4.13) | S465 | ++ | + | ++ | ++ | ++ |
| Experimental Example 2 | | R600 | V-02/V-02-L2 (3:1) | 0.125 | 1.1 | DEEA (4.13) | S465 | ++ | + | ++ | ++ | ++ |
| Experimental Example 3 | | R600 | V-02 | 0.150 | 1.1 | DEEA (4.13) | S465 | ++ | ++ | ++ | +++ | ++ |
| Experimental Example 4 | | R600 | V-02 | 0.125 | 0.9 | DEEA (4.13) | S465 | ++ | ++ | ++ | +++ | ++ |
| Experimental Example 5 | | R600 | V-02 | 0.125 | 0.9 | DMEA (4.77) | S465 | ++ | ++ | ++ | ++ | ++ |
| Experimental Example 6 | | R600 | V-02 | 0.125 | 0.9 | AMP (4.70) | S465 | ++ | ++ | ++ | +++ | ++ |
| Experimental Example 7 | | R600 | V-02 | 0.095 | 0.7 | DEEA (4.13) | S465 | ++ | ++ | ++ | +++ | ++ |
| Experimental Example 8 | | R600 | V-02 | 0.080 | 0.6 | DEEA (4.13) | S465 | ++ | ++ | ++ | +++ | ++ |
| Experimental Example 9 | | R600 | V-02 | 0.040 | 0.3 | DEEA (4.13) | S465 | + | + | + | +++ | + |
| Experimental Example 10 | | R600 | SV-02/V-02-L2 (3:1) | 0.250 | 2.6 | DEEA (4.13) | S465 | + | + | ++ | + | + |

**[Table 3B]**

| | | PUD | Crosslinking agent (mass ratio) | Content ratio (mass ratio) of crosslinking agent/polyurethane resin | Carbodiimide group/carboxylate group (molar ratio) | Amine compound (pKb) | Surfactant | Adhesiveness | Water resistance | Solvent resistance | Liquid stability | Image quality |
|---|---|---|---|---|---|---|---|---|---|---|---|---|
| Experimental Example 11 | Comparative Example | R600 | SV-02/V-02-L2 (3:1) | 0.500 | 5.2 | DEEA (4.13) | S465 | + | + | ++ | - | |
| Experimental Example 12 | | R600 | SV-02/V-02-L2 (1:1) | 0.580 | 6.1 | DEEA (4.13) | S465 | + | + | ++ | - | |
| Experimental Example 13 | | R600 | SV-02/V-02-L2 (1:1) | 1.000 | 10.3 | DEEA (4.13) | S465 | ++ | ++ | ++ | - | |
| Experimental Example 14 | | R600 | SV-02/V-02-L2 (3:1) | 2.000 | 20.7 | DEEA (4.13) | S465 | ++ | ++ | ++ | +++ | -- |
| Experimental Example 15 | Example | R600 | SV-02/V-02-L2 (3:1) | 0.125 | 1.3 | - | S465 | ++ | + | ++ | + | |
| Experimental Example 16 | | R600 | V-02 | 0.125 | 0.9 | - | S465 | ++ | ++ | ++ | + | |
| Experimental Example 17 | | R600 | V-02 | 0.125 | 0.9 | TETA (6.23) | S465 | ++ | ++ | ++ | + | |
| Experimental Example 18 | | R600 | V-02 | 0.125 | 0.9 | DEA (5.12) | S465 | ++ | ++ | ++ | + | |
| Experimental Example 19 | | R600 | V-02 | 0.125 | 0.9 | TEA (3.25) | S466 | ++ | ++ | ++ | ++ | + |
| Experimental Example 20 | Comparative Example | R600 | - | 0.000 | - | DEEA (4.13) | S465 | - | - | - | +++ | - |
| Experimental Example 21 | | AP201 | SV-02/V-02-L2 (1:1) | 0.580 | 1.7 | - | S465 | - | - | + | - | |
| Experimental Example 22 | | R600 | SV-02/V-02-L2 (3:1) | 0.125 | 1.3 | DEEA (4.13) | - | - | - | + | + | |

### [Consideration]

As listed in Tables 3A and 3B, it was found that when a printing medium was coated with the aqueous resin composition according to the second embodiment of the present invention to form an adhesive layer, and printing was performed on the adhesive layer, the adhesiveness between the printing medium and the adhesive layer and the adhesiveness between the adhesive layer and the ink layer were satisfactory, the durability of the printed material was satisfactory, and the image quality was also satisfactory. Further, even when the aqueous resin composition was stored at a high temperature, the aqueous resin composition was not thickened.

### [Evaluation and evaluation criteria in third embodiment]

In the third embodiment of the present invention, evaluation of the adhesiveness, evaluation of the water resistance, evaluation of the solvent resistance, evaluation of the liquid stability (evaluation of the viscosity after storage), and evaluation of the image quality were performed using the aqueous resin composition obtained in each of the experimental examples by the above-described methods. The evaluation criteria are described below. Further, the evaluation results are listed in Tables 4A and 4B.

### <Evaluation of adhesiveness>

++: The residual ratios of both the BOPP film and the PET film were 80% or greater.
+: The residual ratio of any one of the BOPP film or the PET film was 80% or greater, and the residual ratio of the other film was 60% or greater and less than 80%.
-: The residual ratios of both the BOPP film and the PET film were 60% or greater and less than 80%.
--: The residual ratio of any one of the BOPP film or the PET film was less than 60%, and the residual ratio of the other film was 60% or greater and less than 80%.
---: The residual ratios of both the BOPP film and the PET film were less than 60%.

The rank of + or higher was considered as "acceptable".

### <Evaluation of water resistance>

++: The residual ratios of both the BOPP film and the PET film were 80% or greater.
+: The residual ratio of any one of the BOPP film or the PET film was 80% or greater, and the residual ratio of the other film was 60% or greater and less than 80%.
-: The residual ratios of both the BOPP film and the PET film were 60% or greater and less than 80%.
--: The residual ratio of any one of the BOPP film or the PET film was less than 60%, and the residual ratio of the other film was 60% or greater and less than 80%.
---: The residual ratios of both the BOPP film and the PET film were less than 60%.

The rank of ++ or higher was considered as "acceptable".

### <Evaluation of solvent resistance>

The same evaluation criteria as in the evaluation of the adhesiveness were used.

### <Evaluation of liquid stability (evaluation of viscosity after storage)>

+++: A change in viscosity of the liquid was less than 20%.
++: A change in viscosity of the liquid was 20% or greater and less than 40%.
+: A change in viscosity of the liquid was 40% or greater, but the liquid had fluidity.
-: The liquid was gelled, and as a result, the measurement of the viscosity was not made.

The rank of + or higher was considered as "acceptable".

### <Evaluation of image quality>

++: The image quality was satisfactory, and the adhesive layer and/or the ink layer did not remain on the intermediate transfer member.
+: The image quality was satisfactory, and the adhesive layer and/or the ink layer slightly remained on the intermediate transfer member, but the layers were easily removed.
-: Defects were found in the image quality, and the adhesive layer and/or the ink layer remained on the intermediate transfer member, but the layers were easily removed.
--: Defects were found in the image quality, and the adhesive layer and/or the ink layer remained on the intermediate transfer member, and the layers were not easily removed.

The rank of + or higher was considered as "acceptable".

Further, in Experimental Examples 11 to 13, 15 to 18, 21, and 22, the evaluation was not performed.

**[Table 4A]**

| | | PUD | Crosslinking agent (mass ratio) | Content ratio (mass ratio) of crosslinking agent/polyurethane resin | Carbodiimide group/carboxylate group (molar ratio) | Amine compound (pKb) | Surfactant | Adhesiveness | Water resistance | Solvent resistance | Liquid stability | Image quality |
|---|---|---|---|---|---|---|---|---|---|---|---|---|
| Experimental Example 1 | Comparative Example | R600 | SV-02/V-02-L2 (3:1) | 0.125 | 1.3 | DEEA (4.13) | S465 | ++ | + | ++ | ++ | ++ |
| Experimental Example 2 | | R600 | V-02/V-02-L2 (3:1) | 0.125 | 1.1 | DEEA (4.13) | S465 | ++ | + | ++ | ++ | ++ |
| Experimental Example 3 | Example | R600 | V-02 | 0.150 | 1.1 | DEEA (4.13) | S465 | ++ | ++ | ++ | +++ | ++ |
| Experimental Example 4 | | R600 | V-02 | 0.125 | 0.9 | DEEA (4.13) | S465 | ++ | ++ | ++ | +++ | ++ |
| Experimental Example 5 | | R600 | V-02 | 0.125 | 0.9 | DMEA (4.77) | S465 | ++ | ++ | ++ | ++ | ++ |
| Experimental Example 6 | | R600 | V-02 | 0.125 | 0.9 | AMP (4.70) | S465 | ++ | ++ | ++ | +++ | ++ |
| Experimental Example 7 | | R600 | V-02 | 0.095 | 0.7 | DEEA (4.13) | S465 | ++ | ++ | ++ | +++ | ++ |
| Experimental Example 8 | | R600 | V-02 | 0.080 | 0.6 | DEEA (4.13) | S465 | ++ | ++ | ++ | +++ | ++ |
| Experimental Example 9 | Comparative Example | R600 | V-02 | 0.040 | 0.3 | DEEA (4.13) | S465 | + | + | + | +++ | + |
| Experimental Example 10 | | R600 | SV-02/V-02-L2 (3:1) | 0.250 | 2.6 | DEEA (4.13) | S465 | + | + | ++ | + | + |

**[Table 4B]**

| | | PUD | Crosslinking agent (mass ratio) | Content ratio (mass ratio) of crosslinking agent/polyurethane resin | Carbodiimide group/carboxylate group (molar ratio) | Amine compound (pKb) | Surfactant | Adhesiveness | Water resistance | Solvent resistance | Liquid stability | Image quality |
|---|---|---|---|---|---|---|---|---|---|---|---|---|
| Experimental Example 11 | Comparative Example | R600 | SV-02/V-02-L2 (3:1) | 0.500 | 5.2 | DEEA (4.13) | S465 | + | + | ++ | - | |
| Experimental Example 12 | | R600 | SV-02/V-02-L2 (1:1) | 0.580 | 6.1 | DEEA (4.13) | S465 | + | + | ++ | - | |
| Experimental Example 13 | | R600 | SV-02/V-02-L2 (1:1) | 1.000 | 10.3 | DEEA (4.13) | S465 | ++ | ++ | ++ | - | |
| Experimental Example 14 | | R600 | SV-02/V-02-L2 (3:1) | 2.000 | 20.7 | DEEA (4.13) | S465 | ++ | ++ | ++ | +++ | - |
| Experimental Example 15 | | R600 | SV-02/V-02-L2 (3:1) | 0.125 | 1.3 | - | S465 | ++ | + | ++ | + | / |
| Experimental Example 16 | Example | R600 | V-02 | 0.125 | 0.9 | - | S465 | ++ | ++ | ++ | + | |
| Experimental Example 17 | | R600 | V-02 | 0.125 | 0.9 | TETA (6.23) | S465 | ++ | ++ | ++ | + | |
| Experimental Example 18 | | R600 | V-02 | 0.125 | 0.9 | DEA (5.12) | S465 | ++ | ++ | ++ | + | |
| Experimental Example 19 | | R600 | V-02 | 0.125 | 0.9 | TEA (3.25) | S466 | ++ | ++ | ++ | ++ | + |
| Experimental Example 20 | Comparative Example | R600 | - | 0.000 | - | DEEA (4.13) | S465 | - | - | - | +++ | - |
| Experimental Example 21 | | AP201 | SV-02/V-02-L2 (1:1) | 0.580 | 1.7 | - | S465 | - | - | + | - | |
| Experimental Example 22 | | R600 | SV-02/V-02-L2 (3:1) | 0.125 | 1.3 | DEEA (4.13) | - | - | - | + | + | |

### [Consideration]

As listed in Tables 4A and 4B, it was found that when a printing medium was coated with the aqueous resin composition according to the third embodiment of the present invention to form an adhesive layer, and printing was performed on the adhesive layer, the adhesiveness between the printing medium and the adhesive layer and the adhesiveness between the adhesive layer and the ink layer were satisfactory, the durability of the printed material was satisfactory, and the image quality was also satisfactory. Further, even when the aqueous resin composition was stored at a high temperature, the aqueous resin composition was not thickened.

The present invention has been described in detail using specific aspects, but it is apparent to those skilled in the art that various modifications can be made within a range not departing from the spirit and the scope of the present invention.

The present application is based on Japanese Patent Application No. 2021-176671, filed on October 28, 2021, which is incorporated herein by reference in its entirety.

### Industrial Applicability

The aqueous resin composition according to the present invention is used to produce and process coated materials/printed materials such as signs, advertisements, posters, signages, and menu tables, food and industrial packaging materials such as seal labels, shrink labels, pouches, and bags, and decorative films for electronic products, vehicles and aircrafts, building materials, decorative items, and smartphones, which are required to have water resistance and heat resistance.

### Reference Signs List

- 1: ADHESIVE LAYER COATING UNIT
- 2: PRINTING UNIT
- 10: PRINTING MEDIUM UNWINDING UNIT
- 100: PRINTING PRESS CONTROL UNIT
- 111: PRINTING MEDIUM WINDING UNIT

## Claims

1. An aqueous resin composition comprising at least:
a polyurethane resin that contains a carboxylate group;
a crosslinking agent that contains at least two or more carbodiimide groups in one molecule; and
a surfactant,
wherein a molar ratio of the carbodiimide groups contained in the crosslinking agent to the carboxylate group contained in the polyurethane resin is 0.1 or greater and 5.0 or less, and
the aqueous resin composition further contains an amine compound having a pKb of 3.5 or greater and 4.7 or less.

2. An aqueous resin composition comprising at least:
a polyurethane resin that contains a carboxylate group;
a crosslinking agent that contains at least two or more carbodiimide groups in one molecule; and
a surfactant,
wherein the polyurethane resin is a polyether polyurethane resin, and
a molar ratio of the carbodiimide groups contained in the crosslinking agent to the carboxylate group contained in the polyurethane resin is 0.1 or greater and 2.9 or less.

3. An aqueous resin composition comprising at least:
a polyurethane resin that contains a carboxylate group;
a crosslinking agent that contains at least two or more carbodiimide groups in one molecule; and
a surfactant,
wherein a carbodiimide group equivalent of the crosslinking agent is 400 mol⁻¹ or greater and 700 mol⁻¹ or less, and
a molar ratio of the carbodiimide groups contained in the crosslinking agent to the carboxylate group contained in the polyurethane resin is 0.4 or greater.

4. The aqueous resin composition according to any one of claims 1 to 3,
wherein the polyurethane resin is a saturated hydrocarbon-based polyether polyurethane resin and contains an ammonium carboxylate group.

5. The aqueous resin composition according to any one of claims 1 to 4,
wherein the carbodiimide group equivalent of the crosslinking agent is 500 mol⁻¹ or greater and 700 mol⁻¹ or less.

6. The aqueous resin composition according to claim 1, 4, or 5,
wherein the amine compound has a boiling point of 151°C or higher.

7. A digital printing type image forming method comprising:
coating a printing medium with the aqueous resin composition according to any one of claims 1 to 6 to form an adhesive layer and forming an ink layer with an ink that contains a resin containing a carboxy group.

8. A digital printing type image forming method comprising:
coating a printing medium with an aqueous resin composition to form an adhesive layer and forming an ink layer with an ink,
wherein the aqueous resin composition contains a polyurethane resin containing a carboxylate group, and a crosslinking agent containing at least two or more carbodiimide groups in one molecule.

9. A printed material comprising:
an adhesive layer and an ink layer on a printing medium,
wherein the adhesive layer has a crosslinked structure of a polyurethane resin containing a carboxylate group and a crosslinking agent containing a carbodiimide group.
